# EUROPÄISCHE PATENTSCHRIFT

(11) **EP 1 190 964 B1**
(45) Veröffentlichungstag und Bekanntmachung des Hinweises auf die Patenterteilung: **08.11.2006**
(21) Anmeldenummer: 01890270.0
(22) Anmeldetag: 20.09.2001
(51) Int. Cl.: B65G 1/04, B65G 1/137

(54) **Verfahren zum Ein- und Auslagern von Waren**
Method for storing and retrieving of articles
Procédé pour stocker et prélever des articles

(30) Priorität: 20.09.2000 AT 15962000
(43) Veröffentlichungstag der Anmeldung: 27.03.2002
(73) Patentinhaber: SSI Schäfer Peem GmbH, 8051 Graz-Gösting (AT)
(72) Erfinder: Neukam, Helmut, 8020 Graz (AT)
(74) Vertreter: KLIMENT & HENHAPEL

(56) Entgegenhaltungen:
- EP-A- 0 897 880
- DE-A- 2 034 834
- GB-A- 2 080 265
- JP-A- 1 176 706
- JP-A- 4 116 001
- US-A- 4 678 390
- US-A- 5 226 782

## Beschreibung

Die vorliegende Erfindung bezieht sich auf eine Vorrichtung zum Ein- und Auslagern von Waren aus bzw. in ein Regallager mittels eines Regalbediengerätes gemäß Oberbegriff des Anspruchs 1 sowie auf eine Kommissionieranlage gemäß Oberbegriff des Anspruchs 5.

Bei bekannten Vorrichtungen zum Ein- und Auslagern von Waren, sogenannten Kommissioniervorrichtungen, wird ein Regalbediengerät, welches ein vertikal verfahrbares Lastaufnahmemittel aufweist in einer Regallagergasse waagrecht verfahren. Die so bedienten Regallager weisen eine große Höhe von etwa 3m-15m auf. In einem zentralen Computer ist der Lagerort jeder Ware innerhalb der Regallagers gespeichert. Auf diese Art und Weise kann für einen einzelnen Kommissionierauftrag der genaue Fahrweg des Regalbediengerätes programmiert werden. Das Regalbediengerät fährt dann zu seinem ersten Entnahmepunkt im Regallager, entnimmt die Ware von dort und fährt zu einem definierten Ausgangspunkt, wo sämtliche für einen Kommissionierauftrag benötigten Waren gesammelt werden. Für die noch fehlenden Waren, die ebenfalls für diesen Kommissionierauftrag bestimmt sind, ist es erforderlich, dass das Regalbediengerät zu seinem programmierten zweiten Entnahmepunkt verfährt, die Ware entnimmt und wieder zu seinem definierten Ausgangspunkt zurückkehrt, wo bereits die aus dem ersten Entnahmepunkt geförderten Waren warten. Je nach Größe des Kommissionierauftrags müssen so mehrere Entnahmepunkte innerhalb der Regallagerstraße angefahren werden, um einen einzelnen Kommissionierauftrag zu vervollständigen.

Die DE 296 15 090 U1 zeigt beispielsweise ein solches Regallager.

Ein großer Nachteil bei diesen bekannten Kommissionierverfahren ist die Tatsache, dass das Regalbediengerät sehr große Wegstrecken zurücklegen muss. Das Regalbediengerät muß nach jeder Aufnahme von Waren aus dem Regallager, diese Waren, die meistens in Transportbehältern gelagert sind, zum definierten Ausgangspunkt transportieren, bevor es weitere Waren aus anderen Regalbereichen entnehmen kann. So kann es durchaus vorkommen, dass das Regalbediengerät Waren aus zwei benachbarten Regalfächern des Regallagers entnehmen muss, dazwischen jedoch die gesamte Regallagergasse bis zum definierten Ausgangspunkt verfahren muss, um den ersten Behälter abzusetzen und dann wieder den gesamten Weg zurückverfährt, um den zweiten Behälter zu holen.

Aus der US 4,678,390, der EP 302.205 A2 und der DE 33 02 596 C1 ist es daher bekannt, am Regalbediengerät Zwischenspeicher vorzusehen, in welchem die zu kommissionierenden Waren zwischengespeichert werden können, um zu verhindern, dass das gesamte Regalbediengerät nach jedem Kommissioniervorgang den kommissionierten Behälter absetzen muss.

Ein weiterer Nachteil dieser bekannten Verfahren ist die relativ geringe Kommissionierleistung, die sich aufgrund der weiten Wegstrecken ergibt, die das Regalbediengerät zurückzulegen hat, sowie aufgrund der relativ langsamen Kommissionierung aus den Regalen auf das Regalbediengerät.

Aus der DE 94 19 918 U1 ist ein Pressballen-Handhabungsgerät bekannt, welches mehrer Pressballen gleichzeitig handhaben kann. Aus der DE 43 17 144 A1 ist es bekannt, mittels Regalbediengerät mehrere Paletten gleichzeitig zu handhaben.

Ein zusätzlicher Nachteil dieser bekannten Verfahren ist die Tatsache, dass sie hauptsächlich zur vollautomatischen Kommissionierung geeignet sind. Vollautomatische Kommissionierungen weisen jedoch Nachteile auf, wenn es um die Flexibilität der zu kommissionierenden Waren geht. So sind vollautomatische Kommissioniersysteme immer auf einen bestimmten Typ Ware ausgelegt, was insbesondere spezielle Greifvorrichtungen erfordert.

Darüber hinaus ist es aus der GB 2 080 265 bekannt, auf einem waagrecht verfahrbaren Regalbediengerät mit einem einzelnen vertikal verfahrbaren Lastaufnahmemittel einen Zwischenspeicherplatz vorzusehen, um ein beschleunigtes Ein- und Auslagern von Waren aus dem Regallager zu ermöglichen. Das Lastaufnahmemittel ist hierbei in Form eines horizontal rotier- bzw. schwenkbaren Plattenelementes ausgestaltet, was es erfoderlich macht, zur wahlweisen Bedienung des Regallagers und des Zwischenspeicherplatzes eine 180°-Drehung des Lastaufnahmemittel zu vollziehen. Dies beansprucht einen beträchtlichen Zeitaufwand und bedingt konstruktiv einen erhöhten Platzbedarf der Regalbedienvorrichtung.

Es ist daher eine Aufgabe der vorliegenden Erfindung, die genannten Nachteile zu vermeiden und ein Verfahren zum Ein- und Auslagern von Waren vorzuschlagen, das die vom Regalbediengerät zurückzulegenden Entfernungen reduziert, die Kommissionierleistung damit erhöht und flexibel hinsichtlich der zu kommissionierenden Waren ist.

Erfindungsgemäß wird dies durch die kennzeichnenden Merkmale des Anspruchs 1 erreicht.

Bei der Vorrichtung zum Ein- und Auslagern von Waren aus einem Regallager handelt es sich insbesondere um ein waagrecht verfahrbares Regalbediengerät mit einem vertikal verfahrbaren Lastaufnahmemittel zum Ein- und Auslagern von Behältern in ein Regallager. Die Vorrichtung umfasst einen vorzugsweise aus Regalfächern aufgebauten Zwischenspeicherplatz zur Aufnahme der durch das Lastaufnahmemittel ausgelagerten Behälter bzw. zur Aufnahme der durch das Lastaufnahmemittel einzulagernden Behälter.

Neben der Anordnung eines Zwischenspeicherplatzes am verfahrbaren Regalbediengerät, wodurch mehrere Entnahme- bzw. Einlagerungspositionen im Regallager angefahren werden können, ohne nach jedem Vorgang die kommissionierten Waren an einem Sammelpunkt abladen zu müssen bzw. ohne die einzulagernden Waren nach jedem Einlagervorgang von einem Sammelpunkt abzuholen und neben der Anordnung mindestens eines zusätzlichen Lastaufnahmemittels, wodurch die Kommissionierleistung zufolge einer nun möglichen gleichzeitigen Entnahme von Waren aus unterschiedlichen Positionen im Regallager erheblich gesteigert wird, ist es erfindungsgemäß vorgesehen, dass jede Abstellfläche eines Lastaufnahmemittels in Richtung der Regalflächen des Zwischenspeichers kippbar ist.

Auf diese Weise wird ein vereinfachtes Ein- und Auslagern von Behältern im Zwischenspeicher erzielt. Gegenüber bekannten Regalbediengeräten nach dem Stand der Technik, insbesondere solchen, welche über einen Dreh-/Schwenkmechanismus zur Bedienung der Zwischenspeicherplätze aufweisen, wird des weiteren eine wesentliche Platzersparnis erreicht.

Das kennzeichnende Merkmal des Anspruchs 2 erlaubt es, die Kommissionierleistung zusätzlich zu steigern. Auch die Einlagerung vom Lastaufnahmemittel in den Zwischenspeicher und umgekehrt kann so beschleunigt werden.

Die kennzeichnenden Merkmale des Anspruchs 3, wonach der vertikale Abstand zwischen den Abstellflächen der Lastaufnahmemittel größer ist als der vertikale Abstand zwischen den Regalen des Zwischenspeicherplatzes, beschreiben eine bevorzugte Ausführungsform des Lastaufnahmemittels.

Durch das kennzeichnende Merkmal des Anspruchs 4 ist ein weiteres vereinfachtes Einlagern der Waren in den Zwischenspeicher möglich, da jede Regalfläche des Zwischenspeichers wahlweise in Fahrtrichtung der Vorrichtung oder normal dazu kippbar ist.

Es ist ein weitere Aufgabe der vorliegenden Erfindung eine Kommissionieranlage vorzusehen, welche eine größere Kommissionierleistung als bekannte Kommissionieranlagen erbringt.

Eine Kommissionieranlage gemäß Anspruch 5 weist hierbei ebenfalls das erfindungsgemäße Merkmal auf, dass jede Abstellfläche eines Lastaufnahmemittels in Richtung der Regalflächen des Zwischenspeichers kippbar ist.

Die kennzeichnenden Merkmale der Ansprüche 6 bis 13 beschreiben bevorzugte Ausgestaltungen einer erfindungsgemäßen Kommissionieranlage.
Es folgt nun eine detaillierte Beschreibung der erfindungsgemäßen Vorrichtung anhand eines Ausführungsbeispiels. Dabei zeigt:
- Fig.1: einen schematischen Grundriss einer nach dem erfindungsgemäßen Verfahren arbeitenden Kommissionieranlage
- Fig.2: eine Seitenansicht eines erfindungsgemäßen Regalbediengerätes
- Fig.3: eine Seitenansicht entlang der Linie AA aus Fig. 1

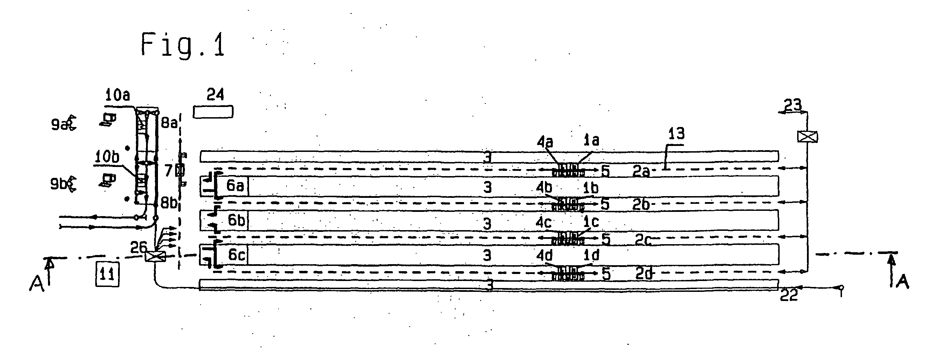

In Fig.1 sind vier waagrecht entlang der Pfeile 5 auf Laufschienen 13 verfahrbare Regalbediengeräte 1a,1b,1c,1d in Regallagergassen 2a,2b,2c,2d angeordnet. Jede Regallagergasse wird von ein Regallager 3 bildende Regallagerwänden seitlich begrenzt. Jedes der Regalbediengeräte 1a,1b,1c,1d weist einen erfindungsgemäßen Zwischenspeicherplatz 4a,4b,4c,4d auf.

An einer Stirnseite der Regallagergassen 2a,2b,2c,2d befindet sich jeweils ein Pufferspeicher 6a,6b,6c welcher an seiner den Regallagergassen gegenüberliegenden Seite von einem Pufferspeicherbediengerät 7 be- bzw. entladen werden kann. An das Pufferspeicherbediengerät 7 schließen in weiterer Folge mit Waagen 10a,10b versehene Übergabestationen 8a,8b an, die von Personen 9a,9b bedient werden.

Die gesamte Anlage ist über einen zentralen Computer 11 vernetzt.

Die Laufschienen 13 führen zu einer Reparatur- und Wartungsposition 23, wo eventuelle Reparatur und Wartungstätigkeiten an den Regalbediengeräten 1a,1b,1c,1d durchgeführt werden können. In diesem Fall wird jene Regallagergasse 2a,2b,2c,2d, in welcher das zu reparierende oder zu wartende Regalbediengerät 1a,1b,1c,1d tätig war, von einem anderen, noch einsatzfähigen Regalbediengerät betreut. Der zentrale Computer 11 teilt in diesem Fall einem der restlichen Regalbediengeräte 1a,1b,1c,1d den Auftrag zu, aus der nunmehr nicht mehr betreuten Regallagergasse 2a,2b,2c,2d zu kommissionieren, bzw. dort einzulagern. In der Reparatur- und Wartungsposition kann auch ein zusätzliches Regalbediengerät als Reserve aufbewahrt werden.

Gleich verhält es sich mit dem Pufferspeicherbediengerät 7 und der dazugehörenden Reparatur- und Wartungsposition 24.

Es wird nun die erfindungsgemäße Verfahrensweise anhand eines beispielhaften Auslagerungsvorgangs beschrieben:

Über den zentralen Computer 11 werden mehrere Kommissionieraufträge in das System eingegeben, beispielsweise ein Auftrag A, ein Auftrag B und ein Auftrag C. Auftrag A umfasst dabei Waren a,b,c,d, Auftrag B umfasst Waren a,c und Auftrag C umfasst Waren a,b,d. Die Stückzahlen der zu einem Kommissionierauftrag gehörenden Waren sind dabei jeweils unterschiedlich. Sämtliche Waren werden in sortenreinen Behältern aufbewahrt, dh. dass in jedem Behälter nur eine Warensorte gelagert ist. Wahlweise können auch mehrere unterschiedliche Warensorten in einem Behälter aufbewahrt werden, beispielsweise zwei Warensorten oder vier Warensorten, wobei die einzelnen Warensorten durch im Behälter angeordnete Trennwände getrennt sind. Der Lagerort jedes Behälters mit bestimmten Waren im Regallager 3 ist aufgrund des Einlagerungsverfahrens, auf das später noch eingegangen wird, bekannt. Die Regalbediengeräte 1a,1b,1c,1d bekommen daher den Auftrag, die oben genannten Behälter, welche die gewünschten Waren enthalten, aus dem Regallager zu kommissionieren.

Beispielsweise bekommt das Regalbediengerät 1a den Auftrag, vier Behälter mit der Ware a und zwei Behälter mit der Ware b zu kommissionieren. Das Regalbediengerät 1b bekommt den Auftrag drei Behälter mit der Ware a und sechs Behälter mit der Ware b zu kommissionieren. Das Regalbediengerät 1c bekommt den Auftrag sieben Behälter mit der Ware c und einen Behälter mit der Ware d zu kommissionieren. Beispielhaft wird nun davon ausgegangen, dass damit sämtliche Waren zur Verfügung stehen, um die drei Kommissionieraufträge A,B,C auszuführen.

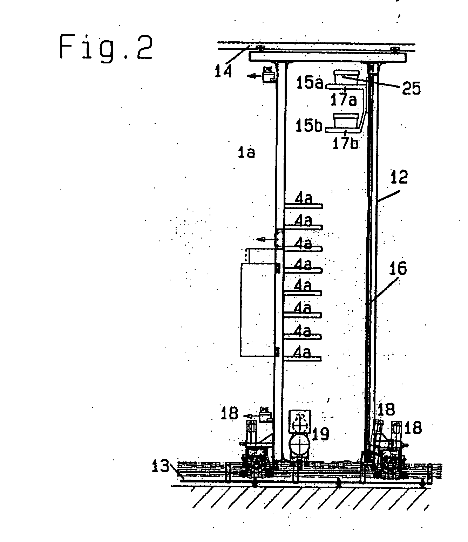

Um einen Behälter mit der Ware a dem Regallager zu entnehmen, verfährt nun das Regalbediengerät 1a zu dem ersten Entnahmepunkt innerhalb der Regallagergasse 2a. Anstatt jedoch diesen Behälter zum Pufferspeicher 6a zu bringen, wird der erste Behälter mit der Ware a gleich nach der Entnahme aus dem Regallager auf dem mit dem Regalbediengerät verfahrbaren Zwischenspeicherplatz 4a abgestellt. Unmittelbar danach kann das Regalbediengerät 1a den zweiten Entnahmepunkt anfahren und den zweiten zu kommissionierenden Behälter mit der Ware a entnehmen und wiederum im Zwischenspeicherplatz 4a abstellen. Es ist des weiteren vorgesehen, dass das Regalbediengerät 1a,1b,1c,1d mit zwei oder mehreren Lastaufnahmemitteln versehen ist (siehe Fig.2). Dann ist es möglich, zwei oder mehrere Behälter mit der gewünschten Ware gleichzeitig dem Regallager zu entnehmen und diese gleichzeitig auf dem Zwischenspeicherplatz abzustellen. Die Kommissionierleistung wird dabei um den entsprechenden Faktor erhöht. Das soeben beschriebene erfindungsgemäße Verfahren wird so lange wiederholt, bis entweder sämtliche für das Regalbediengerät 1a anstehenden Entnahmeaufträge abgearbeitet sind, oder bis der Zwischenspeicherplatz 4a voll ist. Dann verfährt das Regalbediengerät 1a zum Pufferspeicher 6a und übergibt die Behälter mit der Ware aus dem Zwischenspeicher 4a in den Pufferspeicher 6a.

Die Regalbediengeräte 1b,1c,1d arbeiten nach dem gleichen erfindungsgemäßen Verfahrensprinzip.

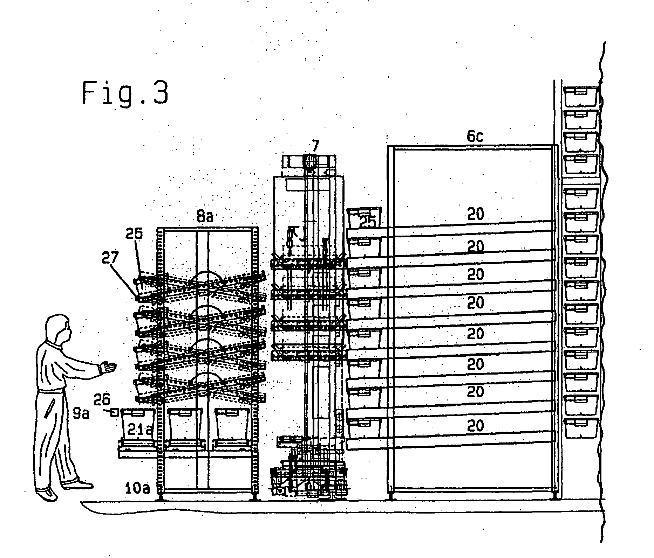

Die Übergabe der Behälter von den Zwischenspeichern 4a,4b,4c,4d in die Pufferspeicher 6a,6b,6c erfolgt unter Beibehaltung der Speicherreihenfolge, dh jene Reihenfolge, die die Behälter in den Zwischenspeichern 4a,4b,4c,4d eingenommen haben, nehmen sie auch in den Pufferspeichern 6a,6b,6c ein. Ist, wie im vorliegenden Beispiel aus Fig.2 ersichtlich, der Zwischenspeicherplatz 4a,4b,4c,4d mit acht übereinanderliegenden Abstellplätzen ausgeführt, so muss der Pufferspeicher 6a,6b,6c ebenfalls acht übereinanderliegende Abstellplätze aufweisen (siehe Fig.3) wobei die Tiefe selbstverständlich größer als im Zwischenspeicherplatz sein kann.

Nach der Übergabe der Behälter in den Pufferspeicher 6a,6b,6c sind die Regalbediengeräte 1a,1b,1c,1d wieder bereit zum Kommissionieren der nächsten Aufträge und können sofort damit beginnen.

Sämtliche verwendeten Behälter sind mit Strichcodes versehen, die einmal beim Entnehmen der Behälter aus dem Regallager 3 mittels Strichcodelesern, die beispielsweise am Lastaufnahmemittel befestigt sind, gelesen werden. Somit kann mittels Zentralcomputer eine Kontrolle erfolgen, ob auch die richtigen Behälter durch die Regalbediengeräte 1a,1b,1c,1d entnommen wurden. Dadurch ist weiters die Position eines jeden Behälters im Zwischenspeicherplatz 4a,4b,4c,4d und in weiterer folge auch im Pufferspeicher 6a,6b,6c bekannt.

Das Pufferspeicherbediengerät 7 beginnt nun die Behälter aus den Pufferspeichern 6a,6b,6c zu entnehmen. Die Behälter werden dabei nochmals mittels Strichcode identifiziert. Dann erfolgt die Umordnung der Behälter in die Übergabestationen 8a,8b. Diese sind wesentlich niedriger ausgeführt als der Pufferspeicher 6a,6b,6c (siehe Fig.3) der ja auf den Zwischenspeicher 4a,4b,4c,4d abgestimmt ist. Jede Übergabestation 8a,8b wird manuell von einem Menschen 9a,9b bedient, der nun von den in der Übergabestation 8a,8b befindlichen Behältern die für einen Kommissionierauftrag erforderlichen Waren aus den Behältern herausnimmt und in einen einem bestimmten Kommissionierauftrag zugeordneten Auftragsbehälter 21a,21b kommissioniert.

Jede Übergabestation 8a,8b ist mit einer dreistelligen Leuchtanzeige 26 und fünf Spaltenleuchten ausgestattet. Direkt vor jedem Behälter 25 der Übergabestation 8a,8b sind weiters x Leuchten 27 angeordnet, wobei x der Anzahl der Warensorten im Behälter 25 entspricht. Befindet sich nur eine Warensorte im Behälter 25, leuchten alle x Leuchten 27. Sind mehrere Warensorten durch Trennwände in einem Behälter 25 gelagert, so leuchtet nur jene Leuchte 27, hinter deren Behälterabteilung sich die richtige Ware befindet. Bei jeder Leuchte 27 ist auch ein Wärmesensor angebracht, der den Zugriff in einen Behälter 25 erkennt. Fährt der Kommissionierbehälter 21a in den Bearbeitungsplatz an der Übergabestation 8a,8b ein, so wird auf der dreistelligen Leuchtanzeige 26 die Stückzahl der aus dem Behälter 25 zu kommissionierenden Waren angezeigt. Weiters leuchtet eine der fünf Spaltenleuchten auf, um der kommissionierenden Person zur Spalte des Behälters 25 zu führen. Greift die kommissionierende Person in den falschen Lagerbehälter 25 oder in die falsche Behälterabteilung aber im richtigen Behälter 25, so wird dies durch die Wärmesensoren erkannt und ein Warnton ausgegeben.

Nach Beendigung eines Kommissioniervorganges aus einem Behälter wird dessen Gewicht durch eine Waage 10a,10b gemessen, auf welcher der Auftragsbehälter 21a,21b ruht. Da jede im Regallager enthaltene Ware auch gewichtsmäßig bekannt ist, kann auf diese Art und Weise festgestellt werden, ob die kommissionierende Person die richtige Anzahl an Waren aus einem Behälter kommissioniert hat. Ist dies der Fall kann aus dem nächsten Behälter kommissioniert werden, stimmt die Gewichtszunahme des Auftragsbehälters 21a,21b nicht mit der errechneten Gewichtszunahme überein, wird die kommissionierende Person durch ein Warnsignal davon in Kenntnis gesetzt. Ist der momentan zu bearbeitende Kommissionierauftrag beendet, kann der Auftragsbehälter 21a,21b abtransportiert werden.
Leere Behälter 25 werden von der kommissionierenden Person 9a,9b aus der Übergabestation 8a,8b entnommen und auf eine Fördertechnik aufgestellt und in weiterer Folge über ein nicht gezeichnetes Transportsystem zum Wareneingang befördert. Behälter, die noch Waren enthalten werden über das Pufferspeicherbediengerät, den Pufferspeicher und das erfindungsgemäße Regalbediengerät wieder in das Regallager zurückbefördert.

Die Beschickung des Regallagers 3 erfolgt auf umgekehrte Art und Weise, wie oben beschrieben. Sortenreine Behälter mit Waren werden über ein Transportsystem, beispielsweise ein Förderband 22 direkt vom Wareneingang (nicht gezeichnet) an das Pufferspeicherbediengerät 7 geliefert. Dieses entnimmt die Waren vom Förderband und teilt diese in die Pufferspeicher 6a,6b,6c auf, von wo die Behälter auf die jeweiligen Zwischenspeicher 4a,4b,4c,4d gekippt werden. Von dort werden die Behälter auf die Lastaufnahmemittel 15a,15b gekippt um dann an der vorbestimmten Position in das Regallager eingeschoben zu werden.

Fig.2 zeigt eine Seitenansicht eines erfindungsgemäßen Regalbediengerätes 1a,1b,1c,1d. Dieses besteht aus einem Grundrahmen 12, der entlang einer am Boden angeordneten Laufschiene 13 und einer im oberen Endbereich des Regallagers verlaufenden Führungsschiene 14 verfahrbar ist. Am Grundrahmen 12 sind zwei beispielsweise mittels eines Zahnriemens 16 angetriebene, vertikal verfahrbare Lastaufnahmemittel 15a,15b angeordnet. Die Lastaufnahmemittel 15a,15b bestehen beispielsweise jeweils aus einem Greifmittel (nicht gezeichnet) und einer Abstellfläche 17a,17b.

Diese sind erfindungsgemäß um eine Achse normal zur Fahrtrichtung des Regalbediengerätes 1a,1b,1c,1d und parallel zum Boden kippbar angeordnet. Auf diese Art und Weise können die mittels der Greifmittel aus dem Regallager geförderten Behälter auf die ebenfalls am Grundrahmen 12 angeordneten Zwischenspeicherplätze 4a,4b,4c,4d gekippt werden. Die Abstellflächen 17a,17b sind dazu mit Röllchen (nicht gezeichnet) versehen.

Die Zwischenspeicherplätze 4a,4b,4c,4d sind ebenfalls um eine Achse normal zur Fahrtrichtung des Regalbediengerätes 1a,1b,1c,1d und parallel zum Boden kippbar angeordnet. Dadurch können die Lastaufnahmemittel, die in diesem Fall dann als Lastabgabemittel verwendet werden, mit Behältern aus dem Zwischenspeicherplatz versorgt werden. Die Zwischenspeicherplätze 4a,4b,4c,4d sind weiters im eine Achse parallel zur Fahrtrichtung kippbar. Dadurch können die darauf abgestellten Behälter schnell und einfach auf die entsprechenden Regale des Pufferspeichers 6a,6b,6c gekippt werden. Auch die Regale des Zwischenspeichers sind mit Röllchen (nicht gezeichnet) versehen, die das Gleiten der Behälter erleichtern.

Das erfindungsgemäße Regalbediengerät 1a,1b,1c,1d weist weiters eine Antriebseinheit 18 sowie eine Kompressoreinheit 19 auf, welche die diversen Kippbewegungen auf an sich bekannte Art und Weise ermöglicht.

Fig.3 zeigt eine Seitenansicht entlang der Linie AA aus Fig. 1. Sehr gut ist dabei der Pufferspeicher 6c zu erkennen, der acht übereinander angeordnete Fächer 20 aufweist. Die Anzahl der Fächer 20 ist auf die Anzahl der Fächer der Zwischenspeicherplätze 4a,4b,4c,4d abgestimmt. Die einzelnen Fächer 20 sind senkrecht zur Zeichenblattebene kippbar, um ein Be- und Entladen der Regealbediengeräte 1a,1b,1c,1d zu ermöglichen.

Die Fächer der Übergabestationen sind in einer Ebene parallel zur Zeichenblattebene kippbar, um einerseits die Behälter 25 vom Pufferspeicherbediengerät 7 zur kommissionierenden Person 9a,9b zu befördern und andererseits nicht leerkommissionierte Behälter 25 wieder auf das Pufferspeicherbediengerät 7 zurückzubefördern, um sie wieder in das Regallager 3 einzuspeisen.

## Patentansprüche

1. Vorrichtung zum Ein- und Auslagern von Waren aus einem Regallager, insbesondere ein waagrecht verfahrbares Regalbediengerät (1a, 1b, 1c, 1d) mit einem vertikal verfahrbaren Lastaufnahmemittel (15a,15b), zum Ein- und Auslagern von Behältern (25) in ein Regallager (3), wobei die Vorrichtung einen vorzugsweise aus Regalfächern aufgebauten Zwischenspeicherplatz (4a,4b,4c,4d) zur Aufnahme der durch das Lastaufnahmemittel (15a,15b) ausgelagerten Behälter (25) bzw. zur Aufnahme der durch das Lastaufnahmemittel (15a,15b) einzulagernden Behälter (25), umfasst, wobei mindestens ein zusätzliches Lastaufnahmemittel (15a,15b) vorgesehen ist, **dadurch gekennzeichnet, dass** jede Abstellfläche (17a,17b) eines Lastaufnahmemittels (15a,15b) in Richtung der Regalflächen des Zwischenspeichers (4a,4b,4c,4d) kippbar ist.

2. Vorrichtung nach Anspruch 1, **dadurch gekennzeichnet, dass** jedes Lastaufnahmemittel (15a,15b) ein Greifmittel und eine Abstellfläche (17a,17b) umfasst.

3. Vorrichtung nach einem der Ansprüche 1 und 2, **dadurch gekennzeichnet, dass** der vertikale Abstand zwischen den Abstellflächen (17a,17b) der Lastaufnahmemittel (15a,15b) größer ist als der vertikale Abstand zwischen den Regalen des Zwischenspeicherplatzes (4a,4b,4c,4d).

4. Vorrichtung nach einem der Ansprüche 1 bis 3, **dadurch gekennzeichnet, dass** jede Regalfläche des Zwischenspeichers (4a,4b,4c,4d) wahlweise in Fahrtrichtung (5) der Vorrichtung oder normal dazu kippbar ist.

5. Kommissionieranlage zum Ein- und Auslagern von Waren umfassend ein Regallager (3) und *mindestens* ein ein Lastaufnahmemittel aufweisendes horizontal verfahrbares Regalbediengerät (1a,1b,1c,1d) zum Ein- und Auslagern der Waren, vorzugsweise die Waren enthaltende Behälter (25) in die Regale, wobei das Regalbediengerät (1a,1b,1c,1d) einen *vorzugsweise aus Regalfächern* aufgebauten Zwischenspeicherplatz (4a,4b,4c,4d) aufweist, zum Abstellen der aus dem Regallager (3) entnommenen Waren, bzw. zum Abstellen der im Regallager (3) zu lagernden Waren und ein zusätzlicher ortsfester Pufferspeicher (6a,6b,6c) vorgesehen ist, in welchen die im Zwischenspeicher (4a,4b,4c,4d) zwischengelagerten Waren übergeben werden, bzw. aus welchem Waren in den Zwischenspeicher (4a,4b,4c,4d) übergeben werden, wobei die Waren mittels *des* Pufferspeicherbediengeräts (7) aus diesem Pufferspeicher (6a,6b,6c) entnommen werden und auf Übergabestationen (8a,8b) verteilt werden bzw. wobei die Waren mittels eines Pufferspeicherbediengeräts (7) von einer vordefinierten Nachschubposition (26) in den Pufferspeicher (6a,6b,6c) eingelagert werden und wobei mindestens ein zusätzliches Lastaufnahmemittel (15a,15b) am Regalbediengerät (1a,1b,1c,1d) vorgesehen ist, **dadurch gekennzeichnet, dass** jede Abstellfläche (17a,17b) eines Lastaufnahmemittels (15a,15b) in Richtung der Regalflächen des Zwischenspeichers (4a,4b,4c,4d) kippbar ist.

6. Kommissionieranlage nach Anspruch 5, **dadurch gekennzeichnet, dass** jedes Lastaufnahmemittel(15a,15b) ein Greifmittel, welches in die Regallagerfächer einführbar ist und eine Abstellfläche (17a,17b) umfasst.

7. Kommissionieranlage nach einem der Ansprüche 5 bis 6, **dadurch gekennzeichnet, dass** jede Regalfläche des Zwischenspeichers (4a,4b,4c,4d) wahlweise um eine Achse normal zur Fahrtrichtung des Regalbediengerätes (1a,1b,1c,1d) oder parallel dazu kippbar ist.

8. Kommissionieranlage nach einem der Ansprüche 5 bis 7, **dadurch gekennzeichnet, dass** jede Regalfläche des Pufferspeichers (6a,6b,6c) wahlweise um eine Achse normal zur Fahrtrichtung des Regalbediengerätes (1a,1b,1c,1d) oder parallel dazu kippbar ist.

9. Kommissionieranlage nach einem der Ansprüche 5 bis 8, **dadurch gekennzeichnet, dass** das Pufferspeicherbediengerät (7) quer zur Fahrtrichtung der Regalbediengeräte (1a,1b,1c,1d)verfahrbar ist.

10. Kommissionieranlage nach einem der Ansprüche 5 bis 9, **dadurch gekennzeichnet, dass** das Pufferspeicherbediengerät (7) sämtliche von den Regalbediengeräten (1a,1b,1c,1d) in die Pufferspeicher (6a,6b,6c) übergebenen Behälter (25) auf die Übergabestationen (8a, 8b) umordnet, wobei die Umordnung eine Reduktion der Anzahl der übereinander angeordneten Behälter (25) bewirkt.

11. Kommissionieranlage nach einem der Ansprüche 5 bis 10, **dadurch gekennzeichnet, dass** jede Übergabestation (8a,8b) mit einer Waage (10a,10b) versehen ist.

12. Kommissionieranlage nach einem der Ansprüche 5 bis 11, **dadurch gekennzeichnet, dass** die Übergabestationen (8a,8b) manuell bedient werden.

13. Kommissionieranlage nach einem der Ansprüche 5 bis 12, **dadurch gekennzeichnet, dass** die Regalbediengeräte (1a,1b,1c,1d) und das Pufferspeicherbediengerät (7) von einem zentralen Computer (11) gesteuert werden.

## Claims

1. A device for storing and removing products in and from a shelf storage unit, particularly a horizontally movable shelf operating device (1a, 1b, 1c, 1d) having a vertically movable load receiving means (15a, 15b), for storing and removing containers (25) in and from a shelf storage unit (3), the device comprising an intermediate storage space (4a, 4b, 4c, 4d), preferably constructed from shelving compartments, for receiving the containers (25) removed by the load receiving means (15a, 15b) and/or for receiving the containers (25) to be stored by the load receiving means (15a, 15b), at least one additional load receiving means (15a, 15b) being provided, **characterized in that** every placement surface (17a, 17b) of a load receiving means (15a, 15b) is tiltable in the direction of the shelving compartments of the intermediate storage (4a, 4b, 4c, 4d).

2. The device according to Claim 1, **characterized in that** every load receiving means (15a, 15b) comprises a gripper means and a placement surface (17a, 17b).

3. The device according to one of Claims 1 and 2, **characterized in that** the vertical distance between the placement surfaces (17a, 17b) of the load receiving means (15a, 15b) is greater than the vertical distance between the shelves of the intermediate storage space (4a, 4b, 4c, 4d).

4. The device according to one of Claims 1 through 3, **characterized in that** every shelf surface of the intermediate storage (4a, 4b, 4c, 4d) is tiltable alternately in the travel direction (5) of the device or perpendicularly thereto.

5. An order-picking system for storing and removing products comprising a shelf storage unit (3) and at least one horizontally movable shelf operating device (1a, 1b, 1c, 1d), having a load receiving means, for storing and removing products, preferably the containers (25) containing the products in the shelves, the shelf operating device (1a, 1b, 1c, 1d) having an intermediate storage space (4a, 4b, 4c, 4d) preferably constructed from shelving compartments, for placement of the products taken from the shelf storage unit (3), or for placement of the products to be stored in the shelf storage unit (3), and an additional fixed buffer storage (6a, 6b, 6c) being provided, into which the products temporarily stored in the intermediate storage (4a, 4b, 4c, 4d) are transferred and/or from which products are transferred into the intermediate storage (4a, 4b, 4c, 4d), the products being removed from this buffer storage (6a, 6b, 6c) using the buffer storage operating device (7) and distributed to transfer stations (8a, 8b) and/or the products being stored in the buffer storage (6a, 6b, 6c) from a predefmed supply position (26) using a buffer storage operating device (7) and at least one additional load receiving means (15a, 15b) being provided on the shelf operating device (1a, 1b, 1c, 1d), **characterized in that** every placement surface (17a, 17b) of a load receiving means (15a, 15b) is tiltable in the direction of the shelf surfaces of the intermediate storage (4a, 4b, 4c, 4d).

6. The order-picking system according to Claim 5, **characterized in that** every load receiving means (15a, 15b) comprises a gripper means, which is insertable into the shelf storage compartments, and a placement surface (17a, 17b).

7. The order-picking system according to one of Claims 5 through 6, **characterized in that** every shelf surface of the intermediate storage (4a, 4b, 4c, 4d) is tiltable alternately around an axis perpendicular to the travel direction of the shelf operating device (1a, 1b, 1c, 1d) or parallel thereto

8. The order-picking system according to one of Claims 5 through 7, **characterized in that** every shelf surface of the buffer storage (6a, 6b, 6c) is tiltable alternately around an axis perpendicular to the travel direction of the shelf operating device (1a, 1b, 1c, 1d) or parallel thereto.

9. The order-picking system according to one of Claims 5 through 8, **characterized in that** the buffer storage operating device (7) is movable transversely to the travel direction of the shelf operating devices (1a, 1b, 1c, 1d).

10. The order-picking system according to one of Claims 5 through 9, **characterized in that** the buffer storage operating device (7) rearranges all containers (25) transferred by the shelf operating devices (1a, 1b, 1c, 1d) into the buffer storage (6a, 6b, 6c) on the transfer stations (8a, 8b), the rearrangement causing a reduction of the number of containers (25) situated one on top of another.

11. The order-picking system according to one of Claims 5 through 10, **characterized in that** every transfer station (8a, 8b) is provided with a scale (10a, 10b).

12. The order-picking system according to one of Claims 5 through 11, **characterized in that** the transfer stations (8a, 8b) are operated manually.

13. The order-picking system according to one of Claims 5 through 12, **characterized in that** the shelf operating devices (1a, 1b, 1c, 1d) and the buffer storage operating device (7) are controlled by a central computer (11).

## Revendications

1. Dispositif pour stocker des marchandises dans un entrepôt à rayonnages et pour les en prélever, notamment un transstockeur (1a, 1b, 1c, 1d) mobile en déplacement horizontal, avec un moyen de réception de la charge (15a, 15b) mobile en déplacement vertical et destiné à stocker des récipients (25) dans un entrepôt à rayonnages (3) et à les en prélever, le dispositif comprenant un emplacement d'entreposage (4a, 4b, 4c, 4d) de préférence constitué d'étagères et destiné à recevoir les récipients (25) prélevés par le moyen de réception de la charge (15a, 15b) ou à recevoir les récipients (25) destinés à être stockés moyennant le moyen de réception de la charge (15a, 15b), au moins un moyen de réception de la charge supplémentaire (15a, 15b) étant prévu, **caractérisé en ce que** chaque tablette (17a, 17b) d'un moyen de réception de la charge (15a, 15b) est apte à être basculée en direction des étagères de l'endroit d'entreposage (4a, 4b, 4c, 4d).

2. Dispositif selon la revendication 1, **caractérisé en ce que** chaque moyen de réception de la charge (15a, 15b) comprend un moyen de préhension et une tablette (17a, 17b).

3. Dispositif selon l'une quelconque des revendications 1 et 2, **caractérisé en ce que** l'écart vertical entre les tablettes (17a, 17b) des moyens de réception de la charge (15a, 15b) est supérieur à l'écart vertical entre les étagères de l'endroit d'entreposage (4a, 4b, 4c, 4d).

4. Dispositif selon l'une quelconque des revendications 1 à 3, **caractérisé en ce que** chaque étagère de l'endroit d'entreposage (4a, 4b, 4c, 4d) peut être basculée au choix soit dans la direction de déplacement (5) du dispositif, soit perpendiculairement à celle-ci.

5. Installation de préparation des commandes destinée à stocker et à prélever des marchandises, du type comprenant un entrepôt à rayonnages (3) et au moins un transstockeur (1a, 1b, 1c, 1d) mobile en déplacement horizontal et comportant un moyen de réception de la charge et destiné à stocker des marchandises, de préférence des récipients (25) contenant les marchandises, dans des rayons ou à les en prélever, le transstockeur (1a, 1b, 1c, 1d) comportant un endroit d'entreposage (4a, 4b, 4c, 4d) de préférence constitué d'étagères pour y déposer les marchandises prélevées de l'entrepôt à rayonnage (3) ou pour y déposer des marchandises destinées à être stockées dans l'entrepôt à rayonnages (3) et un dépôt tampon (6a, 6b, 6c) fixe supplémentaire étant prévu dans lequel sont transférées les marchandises entreposées dans l'endroit d'entreposage (4a, 4b, 4c, 4d) ou duquel des marchandises sont transférées dans l'endroit d'entreposage (4a, 4b, 4c, 4d), les marchandises étant prélevées de ce dépôt tampon (6a, 6b, 6c) moyennant l'engin de manutention du dépôt tampon (7) et distribuées à des postes de transfert (8a, 8b) ou les marchandises se trouvant dans une position d'attente (26) prédéterminée étant stockées dans le dépôt tampon (6a, 6b, 6c) moyennant un engin de manutention du dépôt tampon (7) et au moins un moyen de réception de la charge (15a, 15b) supplémentaire étant prévu sur le transstockeur (1a, 1b, 1c, 1d), **caractérisée en ce que** chaque tablette (17a, 17b) d'un moyen de réception de la charge (15a, 15b) est apte à être basculée en direction des étagères de l'endroit d'entreposage (4a, 4b, 4c, 4d).

6. Installation de préparation des commandes selon la revendication 5, **caractérisée en ce que** chaque moyen de réception de la charge (15a, 15b) comprend un moyen de préhension qui est apte à être introduit dans les rayons du rayonnage et qui comporte une tablette (17a, 17b).

7. Installation de préparation des commandes selon l'une quelconque des revendications 5 à 6, **caractérisée en ce que** chaque tablette de l'endroit d'entreposage (4a, 4b, 4c, 4d) est apte à être basculée au choix soit sur un axe perpendiculaire à la direction de déplacement du transstockeur (1a, 1b, 1c, 1d), soit parallèlement à celui-ci.

8. Installation de préparation des commandes selon l'une quelconque des revendications 5 à 7, **caractérisée en ce que** chaque étagère du dépôt tampon (6a, 6b, 6c) est apte à être basculée au choix soit sur un axe perpendiculaire à la direction de déplacement du transstockeur (1a, 1b, 1c, 1d), soit parallèlement à celui-ci.

9. Installation de préparation des commandes selon l'une quelconque des revendications 5 à 8, **caractérisée en ce que** l'engin de manutention du dépôt tampon (7) est mobile en déplacement en travers de la direction de déplacement des transstockeurs (1a, 1b, 1c, 1d).

10. Installation de préparation des commandes selon l'une quelconque des revendications 5 à 9, **caractérisée en ce que** l'engin de manutention du dépôt tampon (7) répartit tous les récipients (25) transférés par les transstockeurs (1a, 1b, 1c, 1d) dans les dépôts tampons (6a, 6b, 6c) sur les postes de transfert (8a, 8b), cette répartition entraînant une réduction du nombre de récipients (25) superposés.

11. Installation de préparation des commandes selon l'une quelconque des revendications 5 à 10, **caractérisée en ce que** chaque poste de transfert (8a, 8b) est muni d'une balance (10a, 10b).

12. Installation de préparation des commandes selon l'une quelconque des revendications 5 à 11, **caractérisée en ce que** les postes de transfert (8a, 8b) sont actionnés manuellement.

13. Installation de préparation des commandes selon l'une quelconque des revendications 5 à 12, **caractérisée en ce que** les transstockeurs (1a, 1b, 1c, 1d) et l'engin de manutention du dépôt tampon (7) sont commandés par un ordinateur central (11).
